(19) Europäisches Patentamt
European Patent Office
Office européen des brevets

(11) **EP 2 499 716 B1**

(12) **FASCICULE DE BREVET EUROPEEN**

(45) Date de publication et mention
de la délivrance du brevet:
**30.05.2018 Bulletin 2018/22**

(21) Numéro de dépôt: **10788359.7**

(22) Date de dépôt: **28.10.2010**

(51) Int Cl.:
*H02J 7/14* (2006.01)    *H02P 9/24* (2006.01)
*H02P 9/48* (2006.01)    *H02J 7/24* (2006.01)

(86) Numéro de dépôt international:
**PCT/FR2010/052310**

(87) Numéro de publication internationale:
**WO 2011/058259 (19.05.2011 Gazette 2011/20)**

(54) **MACHINE ÉLECTRIQUE TOURNANTE À EXCITATION MUNIE D'UN DISPOSITIF RÉGULATEUR NUMÉRIQUE**

ELEKTRISCHE DREHMASCHINE MIT ERREGUNGS- UND DIGITALER REGELUNGSVORRICHTUNG

ROTATING ELECTRICAL MACHINE HAVING EXCITATION AND A DIGITAL REGULATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2009 FR 0958031**

(43) Date de publication de la demande:
**19.09.2012 Bulletin 2012/38**

(73) Titulaire: **Valeo Equipements Electriques Moteur 94046 Créteil Cedex (FR)**

(72) Inventeurs:
• **TISSERAND, Pierre**
  **F-94450 Limeil Brevannes (FR)**
• **CHASSARD, Pierre**
  **F-94000 Creteil (FR)**
• **LABISTE, Laurent**
  **F-94100 Saint Maur Des Fosses (FR)**

(56) Documents cités:
FR-A1- 2 909 237          JP-A- 2000 217 399
US-A1- 2005 218 815      US-A1- 2008 116 858

EP 2 499 716 B1

**Description**

**DOMAINE TECHNIQUE DE L'INVENTION.**

La présente invention concerne une machine électrique tournante à excitation apte à fonctionner en génératrice et munie d'un dispositif régulateur de type numérique.

**ARRIERE PLAN TECHNOLOGIQUE DE L'INVENTION.**

Dans le domaine automobile, il est connu une machine électrique tournante à excitation, utilisée comme alternateur ou alterno-démarreur, qui comprend un inducteur tournant muni d'une bobine d'excitation et un stator à plusieurs enroulements. Quand la machine fonctionne en alternateur et que l'inducteur est tournant, les enroulements du stator fournissent des tensions alternatives qui sont redressées afin d'obtenir une tension continue. Cette tension continue est régulée de manière à fournir au réseau de bord d'alimentation électrique du véhicule, une tension continue constante pour la charge de la batterie et l'alimentation des consommateurs connectés au réseau.

La régulation de la tension de sortie de l'alternateur est faite de manière classique en ajustant le courant d'excitation circulant dans la bobine de l'inducteur. Des machines électriques tournantes similaires sont divulguées par les documents US2008/116858A1, FR2909237A1, ou encore US2005/218815A1. A vitesse de rotation et à charge constante, la réponse de l'alternateur à une variation du courant d'excitation est limitée par la bande passante intrinsèque du système qui dépend des caractéristiques électromécaniques de l'alternateur.

Pour les applications à l'automobile, la tension de sortie doit être régulée de manière à rester constante dans des plages de fonctionnement (plages de vitesse de rotation et de charge électrique représentée par la batterie et les consommateurs) qui sont définies par le constructeurs du véhicule.

Pour ce faire, dans un alternateur d'automobile, la tension de sortie est mesurée et comparée en permanence à une valeur de consigne par un dispositif régulateur qui commande le courant d'excitation de manière à minimiser ou annuler l'erreur entre la tension de sortie mesurée et la valeur de consigne.

La société VALEO EQUIPEMENTS ELECTRIQUES MOTEUR a déjà proposé d'effectuer cette régulation à partir de mesures par échantillonnage à l'aide

La société VALEO EQUIPEMENTS ELECTRIQUES MOTEUR a déjà proposé d'effectuer cette régulation à partir de mesures par échantillonnage à l'aide de techniques numériques, qui procurent des avantages substantiels par rapport aux procédés analogiques classiques, notamment dans ses brevets européens EP 0 481 862 et EP 0 802 606.

Toutefois la mise en oeuvre des algorithmes de traitement numérique sur des microcontrôleurs ne permet pas de modifier facilement le gain, et/ ou la bande passante, et / ou la stabilité, et/ ou la consigne de la boucle de régulation.

De plus, ces algorithmes doivent effectuer des calculs sur un nombre important de bits, ce qui conduit à l'utilisation de convertisseurs analogiques numériques de grande résolution, et par conséquent onéreux.

Enfin, la diversité des algorithmes, qui sont adaptés à chaque application particulière, ne permet pas une standardisation qui rendrait leurs droits de propriété intellectuelle plus facilement protégeables.

Il existe par conséquent un besoin pour une machine électrique tournante à excitation munie d'un régulateur numérique palliant les inconvénients des régulateurs numériques connus de l'état de la technique.

**DESCRIPTION GENERALE DE L'INVENTION.**

La présente invention vise à satisfaire ce besoin et a précisément pour objet une machine électrique tournante à excitation munie d'un dispositif régulateur numérique du type de celles aptes à fonctionner en génératrice délivrant une tension de sortie continue qui est ajustée par un courant d'excitation.

Ce type de machine présente, de manière connue en soi, une bande passante limitée par une première fréquence de coupure prédéterminée.

Le dispositif régulateur numérique de ce type de machine comporte classiquement des moyens de commande du courant d'excitation et une boucle de régulation.

La boucle de régulation comprend, également de manière connue, en entrée, des moyens de mesure par échantillonnage de la tension de sortie générant un signal échantillonné à une première fréquence d'échantillonnage prédéterminée, et, en sortie, des moyens de génération d'un signal de commande commandant ces moyens de commande en fonction du signal échantillonné et d'une valeur de consigne.

La machine électrique tournante à excitation selon l'invention est remarquable en ce que les moyens de mesure comprennent des moyens de sur-échantillonnage tels que la première fréquence d'échantillonnage soit supérieure au double de la première fréquence de coupure et en ce que la boucle de régulation comprend en outre des moyens de décimation du signal échantillonné.

Les moyens de mesure génèrent le signal échantillonné sur un premier nombre de bits prédéterminé, et, fort avantageusement, la boucle de régulation comprend en outre des moyens de filtrage du signal échantillonné de sorte que ledit signal échantillonné comprenne, après traitement par ces moyens, un deuxième nombre de bits prédéterminé supérieur au premier nombre de bits. De préférence, les moyens de filtrage comportent un filtre de type moyenneur effectuant une moyenne glissante sur un nombre d'échantillons prédéterminé du signal échantillonné.

De préférence, les moyens de décimation réalisent un changement de fréquence de sorte que le signal échantillonné présente une seconde fréquence d'échantillonnage inférieure à la première fréquence d'échantillonnage.

Dans un premier mode de réalisation de l'invention, le signal de commande est un signal rectangulaire ayant un rapport cyclique variable et les moyens de génération comprennent un comparateur numérique générant le signal de commande par comparaison du signal échantillonné à un signal de référence obtenu par l'addition de la valeur de consigne à un signal de comptage fourni par un décompteur sur un troisième nombre de bits fonctionnant à une première fréquence d'horloge prédéterminée ou obtenu au moyen d'une table de consultation (dite « look-up table » en anglais) inscrite par exemple dans une mémoire de type ROM ou EEPROM..

Dans d'autres modes de réalisation de l'invention, le signal de comptage est fourni par un compteur-décompteur fonctionnant à une seconde fréquence d'horloge prédéterminée ou obtenu au moyen d'une table de consultation.

Fort avantageusement, la boucle de régulation de la machine électrique tournante à excitation selon l'invention comprend en outre un filtre passe-bas analogique précédant les moyens de mesure et présentant une troisième fréquence de coupure comprise entre la première fréquence de coupure et la moitié de la première fréquence d'échantillonnage.

De préférence, cette boucle de régulation comprend aussi un diviseur de tension, précédant les moyens de mesure, d'un rapport d'atténuation prédéterminé adapté à une plage de fonctionnement de ces moyens de mesure.

On tire bénéfice du fait que la boucle de régulation comprend de plus un décodeur de protocole de communication décodant un signal de contrôle, un bus de données permettant de fixer la valeur de consigne et un bus de configuration permettant de fixer au moins un paramètre parmi les suivants à partir du signal de contrôle décodé :

- la deuxième fréquence de coupure;
- la troisième fréquence de coupure;
- la première fréquence d'horloge;
- la seconde fréquence d'horloge;
- la première fréquence d'échantillonnage;
- la seconde fréquence d'échantillonnage;
- le rapport d'atténuation.

Les quelques spécifications indiquées ci-dessus auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est une représentation schématique d'une machine électrique tournante à excitation munie d'un dispositif régulateur numérique connue de l'état de la technique.

La **Figure 2** est un schéma de principe de la boucle de régulation du dispositif régulateur numérique dont est munie la machine électrique tournante à excitation selon l'invention.

Les **Figures 3a et 3b** montrent la formation des chronogrammes du signal de commande de l'excitation à partir des chronogrammes du signal de comptage dans les premier et second modes de réalisation préférés de l'invention, respectivement.

La **Figure 4** est un schéma de principe du filtre passe-bas numérique que comprend la boucle de régulation du dispositif régulateur numérique dont est munie la machine électrique tournante à excitation selon l'invention.

**DESCRIPTION DES MODES DE REALISATION PREFERES DE L'INVENTION.**

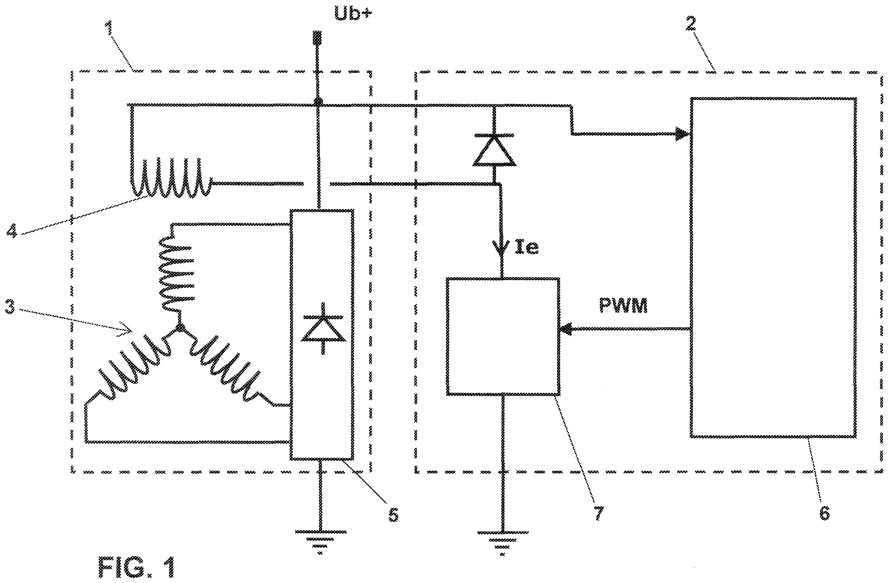

La machine électrique tournante à excitation représentée schématiquement sur la **Figure 1** est, à titre d'exemple non limitatif, un alternateur triphasé 1 muni d'un dispositif régulateur numérique 2.

Le stator 3 de l'alternateur 1 comporte trois enroulements soumis au champ tournant créé par l'inducteur 4 parcouru par un courant d'excitation le.

Des tensions alternatives générées par les enroulements du stator sont redressées par un bloc de redressement 5 qui fournit en sortie une tension de sortie continue Ub+ alimentant le réseau de bord du véhicule.

La tension de sortie Ub+ de l'alternateur 1 est maintenue constante quand la charge et la vitesse de rotation varient au moyen d'une boucle de régulation 6 agissant sur des moyens de commande 7 du courant d'excitation Ie à partir de mesures par échantillonnage de cette tension de sortie Ub+.

Les moyens de commande 7 du courant d'excitation Ie sont généralement constitués de transistors de puissance fonctionnant en commutation et commandés par un signal rectangulaire de rapport cyclique variable PWM.

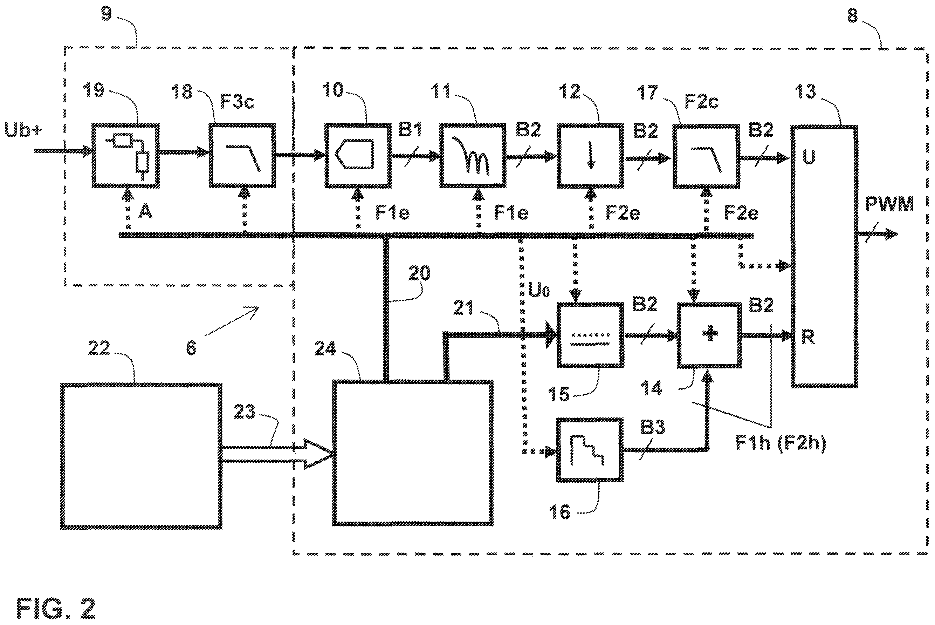

Dans la machine électrique tournante à excitation selon l'invention, la boucle de régulation 6, dont le schéma de principe est représenté sur la **Figure 2,** utilise de préférence dans sa partie numérique 8 un ou plusieurs ASIC (acronyme de « Application Specific Integrated Circuit » en anglais, c'est-à-dire « Circuit intégré spécifique à une application ») dans lesquels sont câblés différents modules de traitement du signal, propriétaires et réutilisables, développés en VHDL (« IP VHDL cores », en anglais, où « IP VHDL » est l'acronyme de « Intellectual Properties Very High Speed Hardware Development Language»).

Une partie analogique 9 de la boucle de régulation 6 adapte la dynamique et la bande passante de la tension de sortie Ub+ de l'alternateur 1 aux caractéristiques d'entrée du convertisseur analogique-numérique 10 fournissant un signal échantillonné à une première fréquence d'échantillonnage F1e, de préférence 64 KHz.

Ce CAN 10 est un circuit standard et peu onéreux ayant une faible résolution en un premier nombre de bits B1, de préférence 10 bits.

Le rapport signal sur bruit SNR en sortie du convertisseur 10 est égal à :

$$ SNR = 6{,}02\ B1 + 1{,}76\ dB $$

Pour le nombre de bits B1= 10 bits du convertisseur 10, le rapport signal sur bruit SNR vaut donc seulement 61,96 dB.

Conformément à l'invention, l'utilisation d'un CAN de faible résolution (10 bits ici) est cependant rendue possible, tout en conservant un nombre de bits efficaces ENOB (acronyme de l'expression « Effective Number Of Bits » en anglais) suffisant dans la boucle de régulation 6, en utilisant une technique de sur-échantillonnage associée à l'utilisation de moyens de filtrage, par exemple un filtre de type moyenneur 11, et de moyens de décimation 12.

De fait, la première fréquence d'échantillonnage F1e (ici 64 KHz) est supérieure au double de la première fréquence de coupure F1c limitant la bande passante du système d'alternateur 1 (ici, typiquement environ 20 Hz).

Cette technique permet d'obtenir plus d'échantillons que ceux strictement nécessaires pour reproduire le signal selon le critère de Nyquist.

Le nombre de bits efficaces dans la boucle 6 est augmenté par le filtre de type moyenneur 11 à condition de diminuer la fréquence des échantillons par décimation 12. L'utilisation d'un filtre de type moyenneur est la solution qui a été choisie dans ce mode de réalisation de l'invention pour accroître le nombre de bits efficaces dans la boucle 6. On notera cependant que d'autres filtres, connus de l'homme du métier, sont également utilisables pour obtenir ce résultat.

Dans les modes de réalisation préférés de l'invention, les caractéristiques du filtre de type moyenneur 11 sont de préférence :

- moyenne glissante sur N=32 échantillons codés sur B1=10 bits à la fréquence F1e=64 KHz, c'est-à-dire que la fonction de transfert du filtre est :

$$ Y_n = (\ X_n + X_{n-1} + X_{n-2} + X_{n-3} + \dots + X_{n-31}\ ) $$

- la bande passante est de 885 Hz à - 3dB ;
- les fréquences de réjection sont 2 kHz, 4 kHz, 6 kHz, 8 kHz ...
- la phase du filtre est du type linéaire, le délai est constant de 250 $\mu$s ;
- le deuxième nombre de bits B2 du signal échantillonné en sortie est égal à B2=15 (les échantillons ont une dynamique de $2^{10}$ x 32 = $2^{15}$).

Les moyens de décimation 12 suivant le filtre de type moyenneur 11 réalisent un changement de fréquence du flux d'information de la boucle de régulation 6. Le signal échantillonné entrant à la première fréquence d'échantillonnage F1e présente une seconde fréquence d'échantillonnage F2e après décimation.

L'amélioration en dB obtenue sur le SNR étant égal à 10*log(F1e/F2e) et le nombre de bits intrinsèque du convertisseur 10 étant B1, la décimation conduit dans cet exemple de réalisation à un ENOB de :

$$ENOB = B1 + (10 \log (F1e/F2e))/6$$

soit :

$$ENOB = 10 + (10 \log (64000/8000))/6 = 11,5 \text{ bits}$$

Le signal échantillonné U issu des moyens de décimation 12 est comparé à un signal de référence R par un comparateur numérique 13.

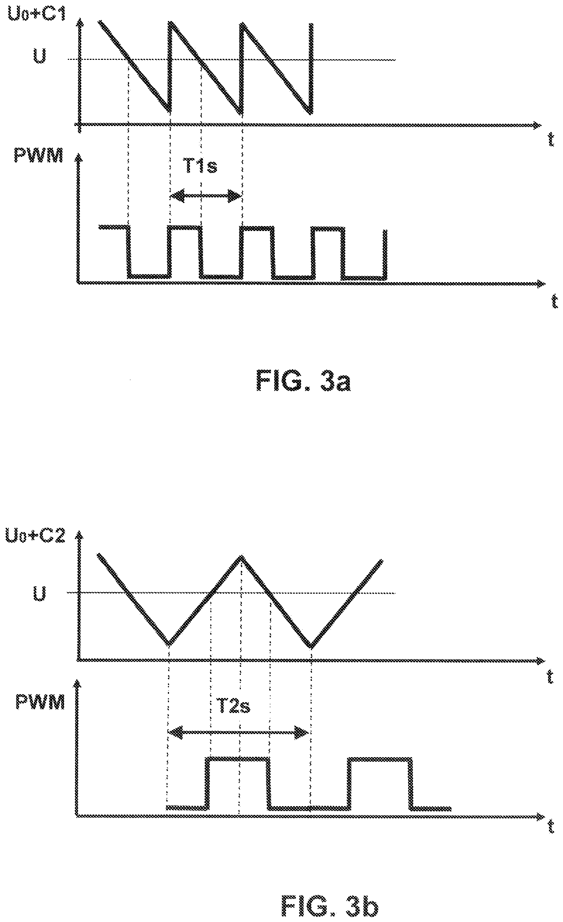

Dans un premier mode de réalisation préféré de l'invention, le signal de référence R est obtenu par l'addition dans un circuit additionneur 14 d'une valeur de consigne $U_0$ contenue dans un registre 15 fixant la tension de sortie Ub+ de l'alternateur 1 à maintenir, et d'un signal de comptage C1 d'un décompteur 16 réinitialisé périodiquement, dont le chronogramme est montré sur la **Figure 3a.**

Dans un autre mode de réalisation, le signal de comptage C1 peut être obtenu au moyen d'une table de consultation inscrite par exemple dans une mémoire de type ROM ou EEPROM.

Le décompteur 16 fonctionne sur un troisième nombre de bits N3 à une première fréquence d'horloge prédéterminée F1h, de ce fait, une première période T1s des dents de scie est égale à $2^{N3}/F1h$.

Dans le cas où, préférentiellement, le troisième nombre de bits N3 du décompteur 16 est 8, et, de préférence, la première fréquence d'horloge F1h est de 64 KHz, la première période T1s des dents de scie est 4 ms, correspondant à une première fréquence de fonctionnement F1s de 250 Hz.

Dans cet exemple de réalisation, le comparateur 13 conduit à un nombre de bits efficaces dans la boucle de :

$$ENOB = B1 + (10 \log (F1e/Fs))/6$$

soit :

$$ENOB = 10 + (10 \log (64000/250))/6 = 14 \text{ bits}$$

Dans un second mode de réalisation préféré de l'invention, le signal de comptage C2 est fourni par un compteur-décompteur au lieu d'un décompteur 16. Dans un autre mode de réalisation, le signal de comptage C2 peut être obtenu au moyen d'une table de consultation inscrite par exemple dans une mémoire de type ROM ou EEPROM.

Le signal de comptage C2 symétrique obtenu est montré sur la **Figure 3b.** Les dents de scies ont dans ce cas une seconde période T2s égale à $2^{N3+1}/F2h$, où F2h est une seconde fréquence d'horloge, correspondant à une seconde fréquence de fonctionnement $F2s = F2h/2^{N3+1}$. Pour obtenir une seconde période de fonctionnement T2s de 4 ms également, la seconde période d'horloge F2h est donc de 128 KHz.

Comme le montrent bien les **Figures 3a et 3b,** la comparaison du signal échantillonné U au signal de référence R produit un signal rectangulaire PWR de rapport cyclique variable à la première ou seconde fréquence de fonctionnement F1s, F2s.

Ce signal rectangulaire commande l'intensité du courant d'excitation de l'alternateur 1 de manière connue telle que le montre la **Figure 1.**

On peut considérer que le comparateur 13 réalise un échantillonnage à la première ou seconde fréquence de fonctionnement F1s, F2s du flux d'information en provenance des moyens de décimation 12.

Afin d'éviter le phénomène de repliement, il est donc nécessaire de placer en amont du comparateur 13 un filtre passe-bas numérique 17 limitant la bande passante au-delà de la moitié de la fréquence de Nyquist, c'est-à-dire la moitié de la première ou seconde fréquence de fonctionnement F1s, F2s du comparateur 13.

La deuxième fréquence de coupure F2c de ce filtre passe-bas numérique 17 est donc comprise entre la première fréquence coupure F1c limitant la bande passante de l'alternateur 1 et la valeur F1s/2 ou F2s/2 limitant la bande passante du comparateur 13.

De manière connue, la fonction de transfert d'un filtre de ce type est :

$$FT(u) = \frac{a}{1 - (1-a)z(u)^{-1}}$$

conduisant à l'équation de récurrence :

$$Y_n = a(X_n + \frac{1}{a}Y_{n-1} - Y_{n-1})$$

Il est important d'avoir un quatrième nombre de bits B4 suffisamment grand pour diminuer les effets de troncature de calcul et limiter ainsi l'erreur systématique de la boucle de régulation 6.

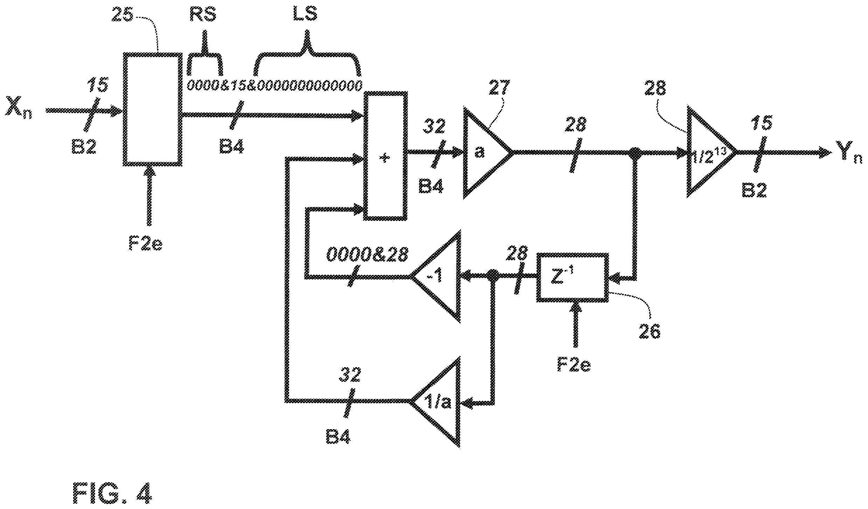

La **Figure 4** montre schématiquement un exemple de réalisation d'un filtre passe-bas numérique possédant une bande passante limitée à 84 Hz, correspondant aux caractéristiques requises par l'alternateur 1 et à celles du comparateur 13 données à titre d'exemples ci-dessus, et où les calculs sont effectués sur un quatrième nombre de bits B4 égal à 32. Dans cet exemple le coefficient 1/a vaut 16.

Les échantillons $X_n$ sortants des moyens de décimation 12 codés sur le second nombre de bits B2 sont chargés dans un premier verrou 25 à la seconde fréquence d'échantillonnage F2e avant d'être divisés par 1/a (décalage à droite RS de 4 bits) et multipliés par 8192 (décalage à gauche LS de 13 bits) de manière à obtenir le quatrième nombre de bits B4.

L'équation de récurrence est implémentée au moyen d'un second verrou 26. Le codage des échantillons en sortie $Y_n$ sur le second nombre de bits B2 est obtenu par une troncature de 4 bits (multiplication 27 par a), suivie d'une troncature de 13 bits (multiplication 28 par 1/8192).

Ce filtre passe-bas numérique 17 a également pour effet de diminuer la gigue sur le signal de commande PWM du courant d'excitation le.

La **Figure 2** montre que la partie analogique 9 de la boucle de régulation 6 comprend en outre un filtre passe-bas analogique 18 situé en aval du convertisseur analogique numérique 10.

Ce filtre analogique 18 a les caractéristiques appropriées afin de :

- réaliser un anti-repliement pour le CAN 10 ;
- permettre une bande passante suffisamment grande devant la bande passante du système alternateur 1 ;
- effectuer un premier moyennage afin de ne pas saturer le CAN ;
- ne pas supprimer totalement le bruit de boucle pour le CAN afin de gagner ½ LSB (LSB est l'acronyme en anglais de « Least Significant Bit », ce qui signifie « Bit de poids le plus faible ») sur le CAN par effet Dither.

De préférence, ce filtre analogique 18 est un filtre passif du 1 er ordre présentant une troisième fréquence de coupure F3c, dans l'exemple de mode de réalisation considéré, de 1 KHz.

Dans le but d'ajuster le gain de boucle du régulateur 2, la partie analogique 9 comprend de plus un diviseur de tension 19 d'un rapport d'atténuation A prédéterminé.

Ce diviseur de tension 19 permet également d'adapter la dynamique de la tension de sortie Ub+ de l'alternateur 1 à la plage de fonctionnement du CAN 10 en aval.

De préférence le rapport d'atténuation A de ce diviseur de tension 19 est 1/8. Cette atténuation permet, dans l'exemple de réalisation considérée où le convertisseur-analogique digital 10 a une plage d'entrée de 3.3V, de détecter et de mesurer des surtensions sur le réseau de bord allant jusqu'à 26 V.

Tous ou certains des différents éléments 10, 11, 12, 13, 14, 15, 16 17, 18, 19 de la boucle de régulation 6, qu'ils soient analogiques ou numériques, sont programmables et interfacés avec un bus de configuration 20 et un bus de données 21 comme le montre la **Figure 2.**

Des moyens de gestion système 22 sont utilisés pour la configuration de ces différents éléments 10, 11, 12, 13, 14, 15, 16 17, 18, 19 via un protocole de communication 23 (par exemple les protocoles LIN, CAN, FlexRay, série ou parallèle ....). Ce protocole 23 utilise toutes les sécurités électroniques de transmission du type redondance ou vérification des données transmisses par « checksum » (c'est un concept de la théorie des codes utilisé pour les codes correcteurs) ou « cyclic redundancy check» (Mécanisme de contrôle de cohérence d'information utilisant des codes cycliques ou algorithme) afin d'augmenter la robustesse de la transmission et la cohérence des informations transmises.

Ces moyens de gestion système 22 sont soit un ordinateur, soit un contrôle moteur ou autre dispositif ayant une interface logicielle ou matérielle permettant l'accès aux différents éléments 10, 11, 12, 13, 14, 15, 16 17, 18, 19 de la boucle de régulation 6 via le protocole 23.

Une électronique 24 spécialisée dans le décodage du protocole 23 permet la configuration des différents éléments 10, 11, 12, 13, 14, 15, 16 17, 18, 19 de la boucle de régulation 6 via le bus de configuration 20 en transmettant la configuration émise par les moyens de gestion système 22 afin d'adapter la boucle de régulation 6, ainsi que ses fonctions électroniques associées (par exemple LRC, charge progressive, machine d'états, alarmes, seuils des différentes mesures), aux besoins.

Notamment, les caractéristiques du régulateur 2, comme le gain, et/ ou la bande passante, et / ou la stabilité, et/ ou le niveau de régulation, sont facilement programmées en fixant à des valeurs appropriées les paramètres des différents éléments 10, 11, 12, 13, 14, 15, 16 17, 18, 19 de la boucle de régulation 6 :

- la deuxième fréquence de coupure F2c du filtre passe-bas numérique 17;
- la troisième fréquence de coupure du filtre passe-bas analogique 18;
- la première fréquence d'horloge F1h du décompteur 16;
- la seconde fréquence d'horloge F2h du compteur-décompteur;
- la première fréquence d'échantillonnage F1e du convertisseur analogique-numérique 10 et du filtre de type moyenneur 11 ;
- la seconde fréquence d'échantillonnage F2e des moyens de décimation 12 et du filtre passe-bas numérique 17;
- le rapport d'atténuation A du diviseur de tension 19

Une configuration minimale est utilisée par défaut en cas de rupture du protocole 23 ou d'incohérence des données reçues par les moyens de gestion système 22, afin de rendre le régulateur 2 sécuritaire (fonctionnement en mode dégradé).

Un calibrage automatique du gain de la partie numérique 8 de la boucle de régulation 6 est effectué soit en fabrication, soit à chaque démarrage, soit durant le fonctionnement par reconfiguration dynamique, par exemple.

La réalisation de la boucle de régulation 6 du dispositif régulateur 2 par différents éléments 10, 11, 12, 13, 14, 15, 16 17, 18, 19 sous la forme d'un ou plusieurs ASIC développés en VHDL, ou tout autre langage permettant la synthèse numérique, offre donc une grande flexibilité pour produire une machine électrique tournante à excitation ayant des performances globales prédéterminées.

La densité d'intégration sur silicium rendue possible par le numérique a également pour avantage de diminuer les courants intrinsèques de traitement.

Les techniques de sur-échantillonnage et de décimation mises en oeuvre par l'invention permettent d'augmenter le nombre de bits efficaces (ENOB) à partir d'un échantillonnage sur un petit nombre de bits.

Il est alors possible d'utiliser un convertisseur analogique-numérique de faible résolution, standard et/ou pas cher, ce qui procure un avantage concurrentiel à la machine électrique tournante à excitation selon l'invention.

Il va de soi que la description ci-dessus s'appliquerait en des termes semblables à d'autres modèles de machines électriques tournantes à excitation que l'alternateur triphasé représenté sur la **Figure 1.**

Les valeurs numériques indiquées correspondent à des développements expérimentaux réalisés par la société demanderesse, et ne sont données qu'à titre d'exemples.

Une machine électrique tournante 1 munie d'un dispositif régulateur 2 comprenant un CAN 10 ayant une résolution autre que 10 bits, et faisant appel à des fréquences de coupures F1c, F2c, F3c, d'échantillonnage F1e, F2e et d'horloge F1h, F2h autres que celles spécifiées aurait pu être décrite de la même manière.

L'invention embrasse donc toutes les variantes possibles de réalisation qui resteraient dans le cadre défini par les revendications ci-après.

## Revendications

**1.** Machine électrique tournante à excitation (1) munie d'un dispositif régulateur numérique (2) du type de celles aptes à fonctionner en génératrice délivrant une tension de sortie (Ub+) qui est ajustée par un courant d'excitation (Ie), et présentant ainsi une bande passante limitée par une première fréquence de coupure (F1c) prédéterminée, ledit dispositif régulateur numérique (2) comportant des moyens de commande (7) dudit courant d'excitation (Ie) et une boucle de régulation (6) comprenant, en entrée, des moyens de mesure (10) par échantillonnage de ladite tension de sortie (Ub+) qui génèrent un signal échantillonné à une première fréquence d'échantillonnage (F1e) prédéterminée et sur un premier nombre de bits (B1) prédéterminé, et, en sortie, des moyens de génération (13) d'un signal de commande (PWM) commandant lesdits moyens de commande (7) en fonction dudit signal échantillonné et d'une valeur de consigne ($U_0$), **caractérisée en ce que** lesdits moyens de mesure (10) comprennent des moyens de sur-échantillonnage tels que ladite première fréquence d'échantillonnage (F1e) soit supérieure au double de ladite première fréquence de coupure (F1c), ladite boucle de régulation (6) comprend en outre des moyens de décimation (12) dudit signal échantillonné, et ladite boucle de régulation (6) comprend en outre des moyens de filtrage (11) dudit signal échantillonné de sorte que ledit signal échantillonné comprenne, après traitement par lesdits moyens (11), un deuxième nombre de bits (B2) prédéterminé supérieur audit premier nombre de bits (B1).

**2.** Machine électrique tournante à excitation (1) selon la revendication 1 précédente, **caractérisée en ce que** lesdits moyens de filtrage comportent un filtre de type moyenneur (11) effectuant une moyenne glissante sur un nombre d'échantillons (N) prédéterminé dudit signal échantillonné.

3. Machine électrique tournante à excitation (1) selon la revendication 1 ou 2 précédente, **caractérisée en ce que** lesdits moyens de décimation (12) réalise un changement de fréquence de sorte que ledit signal échantillonné présente une seconde fréquence d'échantillonnage (F2e) inférieure à ladite première fréquence d'échantillonnage (F1e).

4. Machine électrique tournante à excitation (1) selon la revendication 2 précédente, **caractérisée en ce que** ledit signal de commande (PWM) est un signal rectangulaire ayant un rapport cyclique variable et **en ce que** lesdits moyens de génération comprennent un comparateur numérique (13) générant ledit signal de commande (PWM) par comparaison dudit signal échantillonné (U) à un signal de référence (R) obtenu par l'addition de ladite valeur de consigne ($U_0$) à un signal de comptage (C1) fourni par un décompteur, ou une table de consultation, sur un troisième nombre de bits (B3) fonctionnant à une première fréquence d'horloge prédéterminée (F1h).

5. Machine électrique tournante à excitation (1) selon la revendication 3 précédente, **caractérisée en ce que** ledit signal de commande (PWM) est un signal rectangulaire ayant un rapport cyclique variable et **en ce que** lesdits moyens de génération comprennent un comparateur numérique (13) générant ledit signal de commande (PWM) par comparaison dudit signal échantillonné (U) à un signal de référence (R) obtenu par l'addition de ladite valeur de consigne ($U_0$) à un signal de comptage (C2) fourni par un compteur-décompteur, ou une table de consultation, sur un troisième nombre de bits (B3) fonctionnant à une seconde fréquence d'horloge prédéterminée (F2h).

6. Machine électrique tournante à excitation (1) selon l'une quelconque des revendications 1 à 5 précédentes, **caractérisée en ce que** ladite boucle de régulation (6) comprend en outre un filtre passe-bas analogique (18) précédant lesdits moyens de mesure (10) et présentant une troisième fréquence de coupure (F3c) comprise entre ladite première fréquence de coupure (F1c) et la moitié de ladite première fréquence d'échantillonnage (F1e).

7. Machine électrique tournante à excitation (1) selon l'une quelconque des revendications 1 à 5 précédentes, **caractérisée en ce que** ladite boucle de régulation (6) comprend en outre un diviseur de tension (19) précédant lesdits moyens de mesure (10) d'un rapport d'atténuation (A) prédéterminé adapté à une plage de fonctionnement desdits moyens de mesure (10).

8. Machine électrique tournante à excitation (1) selon l'une quelconque des revendications 1 à 7 précédentes, **caractérisée en ce que** ladite boucle de régulation (6) comprend en outre un décodeur de protocole de communication (24) décodant un signal de contrôle (23), un bus de données (21) permettant de fixer ladite valeur de consigne (U0) et un bus de configuration (20) permettant de fixer au moins un paramètre parmi les suivants à partir dudit signal de contrôle (23) décodé :

   - ladite deuxième fréquence de coupure (F2c);
   - ladite troisième fréquence de coupure (F3c) ;
   - ladite première fréquence d'horloge (F1h);
   - ladite seconde fréquence d'horloge (F2h)
   - ladite première fréquence d'échantillonnage (F1e);
   - ladite seconde fréquence d'échantillonnage (F2e);
   - le rapport d'atténuation (A).

9. Machine électrique tournante à excitation (1) selon l'une quelconque des revendications 1 à 8 précédentes, **caractérisée en ce que** :

   - ladite première fréquence de coupure (F1c) est sensiblement égale à 20 Hz ;
   - ladite deuxième fréquence de coupure (F2c) est sensiblement égale à 84 Hz ;
   - ladite troisième fréquence de coupure (F3c) est sensiblement égale à 1kHz ;
   - ladite première fréquence d'horloge (F1h) est égale à 64 KHz ;
   - ladite seconde fréquence d'horloge (F2h) est égale à 128 KHz ;
   - ladite première fréquence d'échantillonnage (F1e) est égale à 64 KHz ;
   - ladite seconde fréquence d'échantillonnage (F2e) est égale à 8 KHz ;
   - ledit premier nombre de bits (B1) est 10 ;
   - ledit deuxième nombre de bits (B2) est 15 ;
   - ledit troisième nombre de bits (B3) est 8 ;
   - ledit quatrième nombre de bits (B4) est 32 ;
   - le rapport d'atténuation (A) est 1/8.

**EP 2 499 716 B1**

**Patentansprüche**

1. Drehende elektrische Maschine (1) mit Anregung, die mit einer digitalen Regulierungsvorrichtung (2) versehen ist und von dem Typ ist, der als Generator arbeiten kann, der eine Ausgangsspannung (Ub+) ausgibt, die durch einen Anregungsstrom (Ie) eingestellt wird, und somit ein durch eine erste vorgegebene Kappungsfrequenz (F1c) begrenztes Durchlassband aufweist, wobei die digitale Regulierungsvorrichtung (2) Mittel (7) zum Steuern des Anregungsstroms (Ie) und eine Regulierungsschleife (6) umfasst, die an ihrem Eingang Mittel (10) zum Messen durch Abtasten der Ausgangsspannung (Ub+) enthalten, die ein mit einer ersten vorgegebenen Abtastfrequenz (F1e) und an einer vorgegebenen ersten Anzahl (B1) von Bits abgetastetes Signal erzeugen, und an ihrem Ausgang Mittel (13) zum Erzeugen eines Steuersignals (PWM) enthalten, die die Steuermittel (7) als Funktion des abgetasteten Signals und eines Sollwertes ($U_0$) steuern, **dadurch gekennzeichnet, dass** die Messmittel (10) Überabtastungsmittel umfassen, derart, dass die erste Abtastfrequenz (F1e) höher als die doppelte erste Kappungsfrequenz (F1c) ist, dass die Regulierungsschleife (6) außerdem Mittel (12) zum Verkleinern des abgetasteten Signals enthält und dass die Regulierungsschleife (6) außerdem Mittel (11) zum Filtern des abgetasteten Signals enthält, derart, dass das abgetastete Signal nach der Verarbeitung durch die Mittel (11) eine zweite vorgegebene Anzahl (B2) von Bits, die größer als die erste Anzahl (B1) von Bits ist, enthält.

2. Drehende elektrische Maschine (1) mit Anregung nach dem vorhergehenden Anspruch 1, **dadurch gekennzeichnet, dass** die Filterungsmittel ein Filter (11) des Mittelungstyps enthalten, das einen gleitenden Mittelwert an einer vorgegebenen Anzahl (N) von Abtastwerten des abgetasteten Signals erzeugt.

3. Drehende elektrische Maschine (1) mit Anregung nach dem vorhergehenden Anspruch 1 oder 2, **dadurch gekennzeichnet, dass** die Verkleinerungsmittel (12) eine Frequenzänderung bewirken, derart, dass das abgetastete Signal eine zweite Abtastfrequenz (F2e) aufweist, die kleiner als die erste Abtastfrequenz (F1e) ist.

4. Drehende elektrische Maschine (1) mit Anregung nach dem vorhergehenden Anspruch 2, **dadurch gekennzeichnet, dass** das Steuersignal (PWM) ein Rechtecksignal ist, das ein veränderliches Tastverhältnis besitzt, und dass die Erzeugungsmittel einen digitalen Komparator (13) enthalten, der das Steuersignal (PWM) durch Vergleichen des abgetasteten Signals (U) mit einem Referenzsignal (R), das durch Addieren des Sollwertes ($U_0$) zu einem von einem Abwärtszähler oder von einer Nachschlagtabelle gelieferten Zählsignal (C1) erhalten wird, an einer dritten Anzahl (B3) von Bits erzeugt und mit einer ersten vorgegebenen Taktfrequenz (F1h) arbeitet.

5. Drehende elektrische Maschine (1) mit Anregung nach dem vorhergehenden Anspruch 3, **dadurch gekennzeichnet, dass** das Befehlssignal (PWM) ein Rechtecksignal ist, das ein veränderliches Tastverhältnis besitzt, und dass die Erzeugungsmittel einen digitalen Komparator (13) enthalten, der das Befehlssignal (PWM) durch Vergleichen des abgetasteten Signals (U) mit einem Referenzsignal (R), das durch Addieren des Sollwertes ($U_0$) zu einem von einem Abwärtszähler oder von einer Nachschlagtabelle gelieferten Zählsignals (C2) erhalten wird, an einer dritten Anzahl (B3) von Bits erzeugt und mit einer zweiten vorgegebenen Taktfrequenz (F2h) arbeitet.

6. Drehende elektrische Maschine (1) mit Anregung nach einem der vorhergehenden Ansprüche 1 bis 5, **dadurch gekennzeichnet, dass** die Regulierungsschleife (6) außerdem ein analoges Tiefpassfilter (18) umfasst, das den Messmitteln (10) vorgeschaltet ist und eine dritte Kappungsfrequenz (F3c) aufweist, die zwischen der ersten Kappungsfrequenz (F1c) und der Hälfte der ersten Abtastfrequenz (F1e) liegt.

7. Drehende elektrische Maschine (1) mit Anregung nach einem der vorhergehenden Ansprüche 1 bis 5, **dadurch gekennzeichnet, dass** die Regulierungsschleife (6) außerdem einen Spannungsteiler (19) umfasst, der den Messmitteln (10) in einem vorgegebenen Dämpfungsverhältnis (A) vorgeschaltet ist, das an einen Betriebsbereich der Messmittel (10) angepasst ist.

8. Drehende elektrische Maschine (1) mit Anregung nach einem der vorhergehenden Ansprüche 1 bis 7, **dadurch gekennzeichnet, dass** die Regulierungsschleife (6) außerdem Folgendes umfasst: einen Kommunikationsprotokoll-Decodierer (24), der ein Steuersignal (23) decodiert, einen Datenbus (21), der ermöglicht, den Sollwert ($U_0$) zu fixieren, und einen Konfigurationsbus (20), der ermöglicht, wenigstens einen Parameter unter den folgenden Parametern anhand des decodierten Steuersignals (23) zu fixieren:

   - die zweite Kappungsfrequenz (F2c);
   - die dritte Kappungsfrequenz (F3c);
   - die erste Taktfrequenz (F1h);

- die zweite Taktfrequenz (F2h);
- die erste Abtastfrequenz (F1e);
- die zweite Abtastfrequenz (F2e);
- das Dämpfungsverhältnis (A).

9. Drehende elektrische Maschine (1) mit Anregung nach einem der vorhergehenden Ansprüche 1 bis 8, **dadurch gekennzeichnet, dass**:

- die erste Kappungsfrequenz (F1c) im Wesentlichen gleich 20 Hz ist;
- die zweite Kappungsfrequenz (F2c) im Wesentlichen gleich 84 Hz ist;
- die dritte Kappungsfrequenz (F3c) im Wesentlichen gleich 1 kHz ist;
- die erste Taktfrequenz (F1h) gleich 64 kHz ist;
- die zweite Taktfrequenz (F2h) gleich 128 kHz ist;
- die erste Abtastfrequenz (F1e) gleich 64 kHz ist;
- die zweite Abtastfrequenz (F2e) gleich 8 kHz ist;
- die erste Anzahl (B1) von Bits gleich 10 ist;
- die zweite Anzahl (B2) von Bits gleich 15 ist;
- die dritte Anzahl (B3) von Bits gleich 8 ist;
- die vierte Anzahl (B4) von Bits gleich 32 ist;
- das Dämpfungsverhältnis (A) gleich 1/8 ist.

**Claims**

1. Excitation rotating electrical machine (1) equipped with a digital control device (2) of the type able to operate as a generator delivering an output voltage (Ub+) that is adjusted by an excitation current (Ie), and thus having a bandwidth limited by a predetermined first cutoff frequency (F1c), said digital control device (2) including means (7) for controlling said excitation current (Ie) and a control loop (6) comprising, at input, measurement means (10) sampling said output voltage (Ub+) and that generate a signal sampled at a predetermined first sampling frequency (F1e) and on a predetermined first number of bits (B1), and, at output, means (13) for generating a control signal (PWM) controlling said control means (7) on the basis of said sampled signal and of a setpoint value ($U_0$), **characterized in that** said measurement means (10) comprise oversampling means, such that said first sampling frequency (F1e) is more than double said first cutoff frequency (F1c), said control loop (6) furthermore comprises means (12) for decimating said sampled signal, and said control loop (6) furthermore comprises means (11) for filtering said sampled signal, such that said sampled signal comprises, after processing by said means (11), a predetermined second number of bits (B2) greater than said first number of bits (B1).

2. Excitation rotating electrical machine (1) according to preceding Claim 1, **characterized in that** said filtering means include an averaging filter (11) taking a moving average over a predetermined number of samples (N) of said sampled signal.

3. Excitation rotating electrical machine (1) according to preceding Claim 1 or 2, **characterized in that** said decimation means (12) perform a frequency change, such that said sampled signal has a second sampling frequency (F2e) lower than said first sampling frequency (F1e) .

4. Excitation rotating electrical machine (1) according to preceding Claim 2, **characterized in that** said control signal (PWM) is a rectangular signal having a variable duty cycle, and **in that** said generation means comprise a digital comparator (13) generating said control signal (PWM) by comparing said sampled signal (U) with a reference signal (R) obtained by adding said setpoint value ($U_0$) to a counting signal (C1) supplied by a down counter, or a lookup table, on a third number of bits (B3) operating at a predetermined first clock frequency (F1h).

5. Excitation rotating electrical machine (1) according to preceding Claim 3, **characterized in that** said control signal (PWM) is a rectangular signal having a variable duty cycle, and **in that** said generation means comprise a digital comparator (13) generating said control signal (PWM) by comparing said sampled signal (U) with a reference signal (R) obtained by adding said setpoint value ($U_0$) to a counting signal (C2) supplied by an up/down counter, or a lookup table, on a third number of bits (B3) operating at a predetermined second clock frequency (F2h).

6. Excitation rotating electrical machine (1) according to any one of preceding Claims 1 to 5, **characterized in that** said control loop (6) furthermore comprises an analogue low-pass filter (18) upstream of said measurement means (10) and having a third cutoff frequency (F3c) between said first cutoff frequency (F1c) and half of said first sampling frequency (F1e).

7.  Excitation rotating electrical machine (1) according to any one of preceding Claims 1 to 5, **characterized in that** said control loop (6) furthermore comprises a voltage divider (19) upstream of said measurement means (10) with a predetermined attenuation ratio (A) suitable for an operating range of said measurement means (10).

8.  Excitation rotating electrical machine (1) according to any one of preceding Claims 1 to 7, **characterized in that** said control loop (6) furthermore comprises a communication protocol decoder (24) decoding a control signal (23), a data bus (21) that makes it possible to set said setpoint value ($U_0$) and a configuration bus (20) that makes it possible to set at least one parameter from among the following on the basis of said decoded control signal (23):

    - said second cutoff frequency (F2c);
    - said third cutoff frequency (F3c);
    - said first clock frequency (F1h);
    - said second clock frequency (F2h);
    - said first sampling frequency (F1e);
    - said second sampling frequency (F2e);
    - the attenuation ratio (A).

9.  Excitation rotating electrical machine (1) according to any one of preceding Claims 1 to 8, **characterized in that**:

    - said first cutoff frequency (F1c) is substantially equal to 20 Hz;
    - said second cutoff frequency (F2c) is substantially equal to 84 Hz;
    - said third cutoff frequency (F3c) is substantially equal to 1 kHz;
    - said first clock frequency (F1h) is equal to 64 kHz;
    - said second clock frequency (F2h) is equal to 128 kHz;
    - said first sampling frequency (F1e) is equal to 64 kHz;
    - said second sampling frequency (F2e) is equal to 8 kHz;
    - said first number of bits (B1) is 10;
    - said second number of bits (B2) is 15;
    - said third number of bits (B3) is 8;
    - said fourth number of bits (B4) is 32;
    - the attenuation ratio (A) is 1/8.

FIG. 1

FIG. 2

FIG. 3a

FIG. 3b

FIG. 4

**EP 2 499 716 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008116858 A1
- FR 2909237 A1
- US 2005218815 A1
- EP 0481862 A
- EP 0802606 A